# EUROPEAN PATENT APPLICATION

(11) **EP 4 230 382 A1**
(43) Date of publication of application: **23.08.2023**
(21) Application number: 22157537.6
(22) Date of filing: 18.02.2022
(51) Int. Cl.: B29C 63/00, B29C 63/06, B29C 65/02, B29C 65/00, F03D 1/06, F03D 80/50, B29C 63/02, B29L 31/08, B29C 63/48, B29K 75/00, B29K 101/12, B29K 101/10

(54) **METHOD FOR APPLYING A PROTECTIVE FILM ON AT LEAST ONE PORTION OF A WIND TURBINE BLADE, WIND TURBINE BLADE, AND APPARATUS FOR FORMING A GROOVE ON A SURFACE OF AT LEAST ONE PORTION OF A WIND TURBINE BLADE**

(71) Applicant: LM Wind Power A/S, 6000 Kolding (DK)
(72) Inventor: HERRIG, Andreas, 85748 Garching bei München (DE)
(74) Representative: Zimmermann & Partner Patentanwälte mbB

(57) **Abstract**

The present disclosure provides a method (100) of applying a protective film (280) on at least one portion (210, 310) of a wind turbine blade (200), a wind turbine blade (200), and an apparatus for forming (130) a groove (230) on a surface of at least one portion (210, 310) of a wind turbine blade (200). The method of applying a protective film (280) on at least one portion (210, 310) of a wind turbine blade (200) comprises providing (120) the at least one portion (210, 310) of the wind turbine blade (200); forming (130) a groove (230) on a surface of the at least one portion (210, 310) of the wind turbine blade (200), thereby delimiting a first region (A) of the surface of the at least one portion (210, 310) of the wind turbine blade (200) from a second region (B) of the surface of the at least one portion (210, 310) of the wind turbine blade (200), wherein the first region (A) of the surface of the at least one portion (210, 310) of the wind turbine blade (200) includes the groove (230); covering (140) the first region of the surface of the at least one portion (210, 310) of the wind turbine blade (200) with a protective film (280); and pressing (150) an edge region of the protective film (280) in the groove (230), thereby inserting the edge region of the protective film (280) in the groove.

## Description

### TECHNICAL FIELD

Embodiments of the present disclosure relate to a method of applying a protective film on at least one portion of a wind turbine blade, a wind turbine blade, and an apparatus for forming a groove on a surface of at least one portion of a wind turbine blade.

### BACKGROUND

Wind has become increasingly important for electricity generation since wind is a clean, free, and renewable energy source. Accordingly, the amount of wind electricity generation has grown significantly in the past 30 years. Advances in wind energy technology have allowed to produce bigger and more efficient wind turbines. In this regard, wind turbines need to last for 20 years to recoup initial costs that are often above one million dollars per wind turbine. However, as wind turbine blades of the wind turbines spin through the air at tip speeds of 190 to 290 kilometers per hour, the surface of the wind turbine blades collides at high speeds with rain, dirt particles, ice, or snow or a combination thereof. This collision on the surface of the wind turbine blades is essentially like blasting the surface of the wind turbine blades with a power washer, and so over time a protective coating layer on the wind turbine blades wears down.

As the protective coating layer of the wind turbine blades wears away, further materials composing the wind turbine blades are exposed such as resin composites including fiberglass, which also can develop holes, cracking, splitting, and delamination due to the above-mentioned collision on the surface of the wind turbine blades. Further, since a surface roughness of the wind turbine blades is increased, the aerodynamic performance and power production are negatively affected, for instance, by increased friction drag and by an earlier onset of stall.

Accordingly, the eroded wind turbine blades then need expensive repairs to regain aerodynamic efficiency and annual energy production. The reparation of wind turbine blades costs wind farm operators significant money, so wind farm operators invest in expensive repairs and protection for the wind turbine blades. In particular, wind turbine leading edge erosion is one of the most talked about topics when maintenance is provided to wind turbine blades since the wind turbine leading edge is responsible for the aerodynamic efficiency and power output of the wind turbine blade.

As an example of a reparation of the wind turbine leading edge, the surface to be repaired is prepared using a sander to remove existing protective coating and all loose particles. Thereafter, dust is removed and the prepared surface is covered with, for instance, a protective film. Since the protective film is placed only over a surface of the wind turbine leading edge prepared to be repaired, a surface step is generated between the surface of the wind turbine leading edge covered with the protective film, i.e., the surface of the protective film once placed on the surface of the wind turbine leading edge, and the rest of the surface of the wind turbine blade excluding the protective film. As another example of a reparation of the wind turbine leading edge, a surface of a wind turbine leading edge is covered with a protective film without previously preparing the surface of the wind turbine edge if a bonding between the protective film and the surface of the wind turbine blade is assured by the use of a glue. In this case, reparation costs are reduced but a surface step is also generated as indicated above.

Although at a first glance the reparation of the wind turbine leading edge applying a protective film extends the lifetime of the wind turbine blade, the above-mentioned surface step provides several disadvantages to the wind turbine blade. For instance, due to the presence of the surface step on the wind turbine blade, an otherwise laminar boundary layer of the wind turbine blade is made to transition to turbulent, so aerodynamic drag and noise produced by the wind turbine blades are increased. Also, due to stress fluctuations at an edge region of the protective film, the protective film can be prematurely peeled off and damaged.

With the foregoing in view, attempts to reduce the negative effects of the surface step have been conducted. For instance, reducing the surface step by covering the prepared surface of the wind turbine leading edge with a thinner protective film have not been successful since a robustness of the protective film is also decreased and, thus, the protection provided by the protective film to the wind turbine leading edge is also reduced. Further, covering the prepared surface of the wind turbine leading edge with a protective film having different thicknesses and, particular, a thinner edge, increases the cost of manufacturing and maintenance of the wind turbine blade due to the high costs of such protective film. Furthermore, grinding or chamfering of an edge of the protective film providing the above-mentioned surface step is tedious and may cause a damage to the protective film.

Therefore, there exists a need for a method of applying a protective film on at least one portion of a wind turbine blade, a wind turbine blade, and an apparatus for forming a groove on a surface of at least one portion of a wind turbine blade that avoid the above-mentioned disadvantages.

### SUMMARY

In light of the above, a method of applying a protective film on at least one portion of a wind turbine blade, a wind turbine blade, and an apparatus for forming a groove on a surface of at least one portion of a wind turbine blade are provided. Further aspects, benefits, and features of the present disclosure are apparent from the claims, the description, and the accompanying drawings.

According to an aspect of the present disclosure, a method of applying a protective film on at least one portion of a wind turbine blade is provided. The method of applying a protective film on at least one portion of a wind turbine blade includes providing the at least one portion of the wind turbine blade. Further, the method of applying a protective film on at least one portion of a wind turbine blade includes forming a groove on a surface of the at least one portion of the wind turbine blade, thereby delimiting a first region of the surface of the at least one portion of the wind turbine blade from a second region of the surface of the at least one portion of the wind turbine blade, wherein the first region of the surface of the at least one portion of the wind turbine blade includes the groove.

Furthermore, the method of applying a protective film on at least one portion of a wind turbine blade includes covering the first region of the surface of the at least one portion of the wind turbine blade with a protective film. Moreover, the method of applying a protective film on at least one portion of a wind turbine blade includes pressing an edge region of the protective film in the groove, thereby inserting the edge region of the protective film in the groove.

According to another aspect of the present disclosure, a wind turbine blade is provided. The wind turbine blade includes a groove in a first region of a surface of at least one portion of the wind turbine blade, wherein the groove delimits the first region of the surface of the at least one portion of the wind turbine blade from a second region of the surface of the at least one portion of the wind turbine blade. Further, the wind turbine blade includes a protective film on the first region of the surface of the at least one portion of the wind turbine blade, wherein an edge region of the protective film is located in the groove.

According to another aspect of the present disclosure, an apparatus for forming a groove on a surface of at least one portion of a wind turbine blade is provided. The apparatus for forming a groove on a surface of at least one portion of a wind turbine blade includes a groove forming portion. Further, the apparatus for forming a groove on a surface of at least one portion of a wind turbine blade includes a guiding structure supporting the groove forming portion, attached to the groove forming portion, and configured to limit a groove depth, in a thickness direction of the wind turbine blade, formed by the groove forming portion, wherein the guiding structure includes at least one portion configured to be in contact with the surface of the at least one portion of the wind turbine blade while the groove on the surface of the at least one portion of the wind turbine blade is formed.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a flow chart of a method of applying a protective film on at least one portion of a wind turbine blade according to embodiments described herein;
- FIG. 2A: shows a cross-sectional view of a wind turbine blade according to embodiments described herein;
- FIGS. 2B to 2D: show cross-sectional views of one portion of a wind turbine blade according to embodiments described herein;
- FIGS. 2E-1 and 2E-2: show cross-sectional views of one portion of a wind turbine blade according to further embodiments described herein; and
- FIGS. 3A and 3B: show an apparatus for forming a groove on a surface of at least one portion of a wind turbine blade according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

In order to repair and protect a wind turbine blade to regain aerodynamic efficiency and power output, the surface of the wind turbine blade is prepared using a sander to remove existing protective coating and all loose particles and covered with, for instance, a protective film. Since this process generates a surface step between the surface of the wind turbine leading edge covered with the protective film, i.e., the surface of the protective film once placed on the surface of the wind turbine leading edge, and the rest of the surface of the wind turbine blade excluding the protective film, an otherwise laminar boundary layer of the wind turbine blade is made to transition to turbulent, so aerodynamic drag and noise produced by such wind turbine blade are increased. Also, due to stress fluctuations at an edge region of the protective film, the protective film can be prematurely peeled off and damaged. The present disclosure provides a method of applying a protective film on at least one portion of a wind turbine blade, a wind turbine blade, and an apparatus for forming a groove on a surface of at least one portion of a wind turbine blade with the purpose of overcoming at least these disadvantages. Accordingly, a wind turbine blade according to the present disclosure has an improved robustness to erosion, which decreases the number of reparations of the wind turbine blade and the corresponding costs.

Before various embodiments of the present disclosure are described in more detail, some aspects with respect to some terms and expressions used herein are explained.

In the present disclosure, the term "protective film" is to be understood as a single or a plurality of films configured to protect a surface of a at least one portion of a wind turbine blade, e.g., from erosion caused by wind, pollution, snow, etc. In some embodiments, the protective film may include a polymeric film and/or a metallic film. For instance, the polymeric film may include polyurethane, e.g., polyether-based polyurethane, or any thermoplastic polymer. However, the material of the protective film is not limited to a polymeric film and a metallic film and any material able to protect a surface of at least one portion of a wind turbine blade, e.g. from erosion caused by wind, pollution, snow, etc., can be used.

In some embodiments, the protective film may have a thickness of 0.1 to 4 mm, particularly 0.2 to 1.5 mm, and more particularly 0.4 to 0.9 mm. In some embodiments, the protective film may have a thickness equal to or less than 4 mm, particularly equal to or less than 1.5 mm, and more particularly equal to or less than 0.9 mm. In some embodiments, the protective film may have a thickness equal to or more than 0.1 mm, particularly equal to or more than 0.2 mm, and more particularly equal to or more than 0.4 mm.

The term "groove" is to be understood as a recess, depression, or hollow space cut into or formed in a surface, e.g., a surface of one portion of a wind turbine blade. Further, the term "groove" is to be understood as a recess, depression, or hollow space configured to receive an edge region of a protective film. The term "edge region", e.g., in relation to the protective film, is to be understood as an area close to an edge of the protective film and including an edge of the protective film.

The term "interface" is to be understood as a surface forming a common boundary of two bodies, spaces, or phases, e.g., a common boundary of a surface of at least one portion of the wind turbine blade and a protective film. Further, the term "interface" is to be understood as a place where two bodies, spaces, or phases come together, e.g., a place where a surface of at least one portion of the wind turbine blade and a protective film come together.

The term "polymeric material" refers to any natural or synthetic substance composed of large molecules, e.g., oligomers or polymers, or the corresponding precursors. The term "groove depth" is to be understood as a distance from the top to the bottom of a groove in a thickness direction of a wind turbine blade. The term "blade span direction" is to be understood as a direction along a blade span of a wind turbine blade. The term "chord direction" is to be understood as the direction along a chord line of a wind turbine blade.

The term "pressing" is to be understood as moving or causing to move, e.g., an edge region of a protective film, into a position of contact with something, e.g., a groove, by exerting a physical force. Further, the term "pressing" refers to any physical force that moves or causes to move, e.g., an edge region of a protective film, into a position of contact with something, e.g., a groove, and is not limited to a specific amount of physical force.

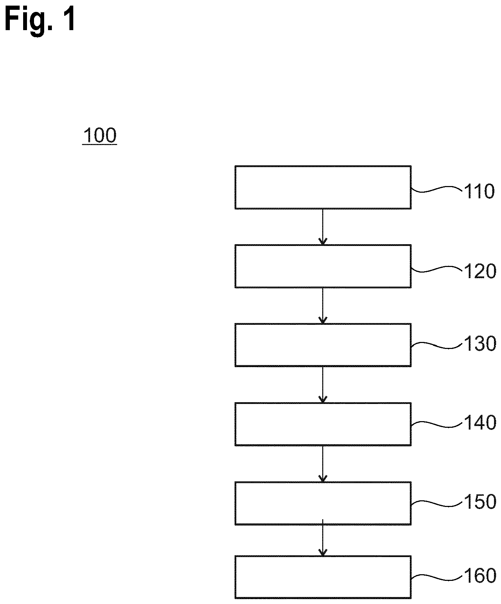

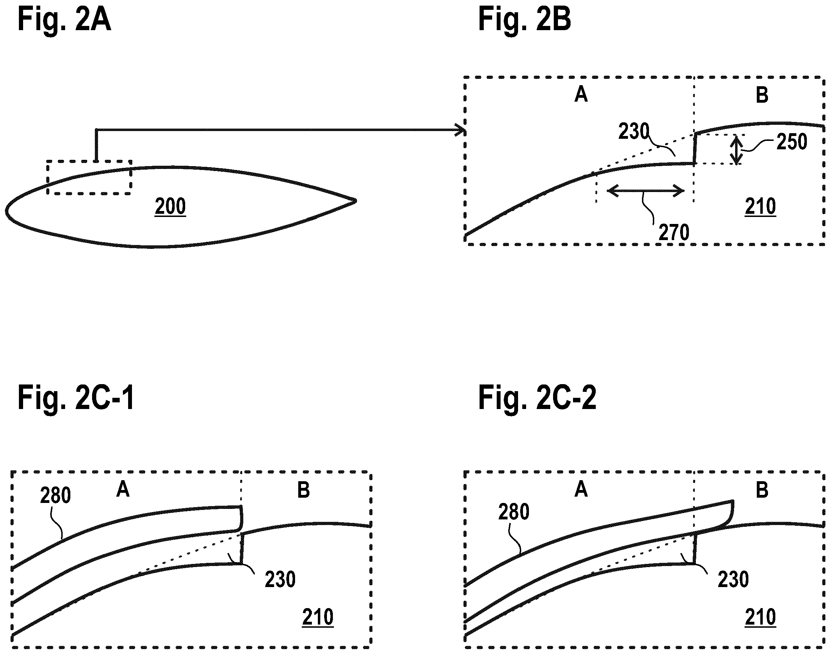

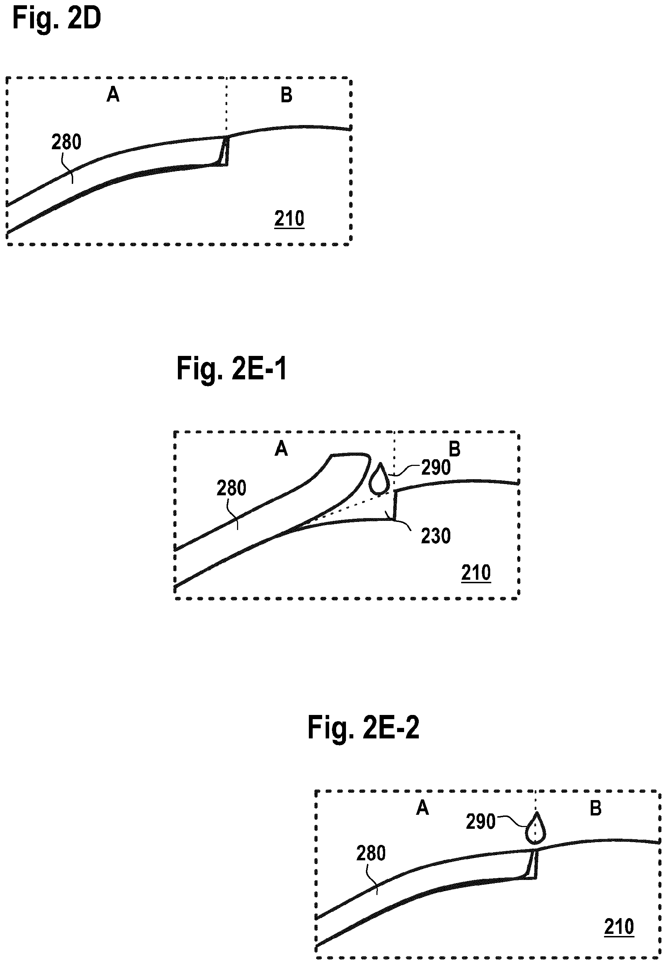

FIG. 1 shows a flow chart of a method 100 of applying a protective film on at least one portion of a wind turbine blade according to embodiments described herein. FIG. 2A shows a cross-sectional view of a wind turbine blade 200 according to embodiments described herein. Further, FIGS. 2B to 2D show cross-sectional views of one portion 210 of a wind turbine blade 200 according to embodiments described herein. Furthermore, FIGS. 2E-1 and 2E-2 show cross-sectional views of one portion 210 of a wind turbine blade 200 according to further embodiments described herein.

With reference to FIG. 1, FIGS. 2A to 2D, and FIGS. 2E-1 and 2E-2, the method 100, beginning at start 110, includes providing 120 the at least one portion 210 of the wind turbine blade 200. Further, the method 100 includes forming 130 a groove 230 on a surface of the at least one portion 210 of the wind turbine blade 200, thereby delimiting a first region A of the surface of the at least one portion 210 of the wind turbine blade 200 from a second region B of the surface of the at least one portion 210 of the wind turbine blade 200, wherein the first region A of the surface of the at least one portion B of the wind turbine blade 200 includes the groove 230, as exemplary shown in FIGS. 2A and 2B.

Furthermore, the method 100 includes covering 140 the first region A of the surface of the at least one portion 210 of the wind turbine blade 200 with a protective film 280, as exemplary shown in FIG. 2C-1. Moreover, the method 100 includes pressing 150 an edge region of the protective film 280 in the groove 230, thereby inserting the edge region of the protective film 280 in the groove 230, as exemplary shown in FIG. 2D. The method 100 concludes at end 160. In some embodiments, the method 100 may further include providing a polymeric material 290 in at least one portion of an interface between the protective film 280 and the groove 230, as exemplary shown in FIGS. 2E-1 and 2E-2. Accordingly, providing a polymeric material 290 in at least one portion of an interface between the protective film 280 and the groove 230 helps to fill possible voids formed between the protective film 280 and the groove 230.

In particular, pressing 150 an edge region of the protective film 280 in the groove 230, thereby inserting the edge region of the protective film 280 in the groove 230, is particularly advantageous since a surface step on the surface of the at least one portion 210 of the wind turbine blade 200 due to the edge region of the protective film 280 is prevented as the edge region of the protective film 280 is hidden in the groove 230. Accordingly, an aerodynamic impact of the surface step on laminar-turbulent boundary layer transition is avoided, resulting in significant performance and noise gains. Also, risk of peeling off and damage of the protective film 280 and respective additional drag and noise produced by the wind turbine blades are prevented or at least decreased.

Further, the at least one portion 210 of the wind turbine blade 200 has an improved robustness to erosion, which decreases the number of reparations of the wind turbine blade and the corresponding costs. Furthermore, annual energy production of the wind turbine blade according to the present disclosure is maintained or improved and, thus, not decreased due to the presence of a surface step.

In the present disclosure, a wind turbine blade 200 has at least one portion 210 of the wind turbine blade 200, which may include a groove 230 in a first region A of a surface of at least one portion 210 of the wind turbine blade 200, wherein the groove 230 delimits the first region A of the surface of the at least one portion 210 of the wind turbine blade 200 from a second region B of the surface of the at least one portion 210 of the wind turbine blade 200, e.g., in a chord direction, as exemplary shown in FIGS. 2A and 2B. For instance, the first region A of the surface of the at least one portion 210 of the wind turbine blade 200 may correspond to a region of the at least one portion 210 of the wind turbine blade 200 to be repaired or maintained, e.g., a wind turbine leading edge. As an example, the second region B of the surface of the at least one portion 210 of the wind turbine blade 200 may correspond to a region of the at least one portion 210 of the wind turbine blade 200 excluded from reparation or maintenance.

In some embodiments, the wind turbine blade 200 has at least one portion 210 of the wind turbine blade 200, which may include a first groove on a suction side of the wind turbine blade 200 and a second groove on a pressure side of the wind turbine blade 200 in a first region A of a surface of at least one portion 210 of the wind turbine blade 200. In some embodiments, the first groove and the second groove may delimit the first region A of the surface of the at least one portion 210 of the wind turbine blade 200 from a second region B of the surface of the at least one portion 210 of the wind turbine blade 200. In some embodiments, the edge region of the protective film 280 may include a first edge region of the protective film 280 and a second edge region of the protective film 280. In some embodiments, the first edge region of the protective film 280 can be located in the first groove. In some embodiments, the second edge region of the protective film 280 can be located in the second groove.

Further, in the present disclosure, the wind turbine blade 200 has at least one portion 210 of the wind turbine blade 200 including a protective film 280 on the first region A of the surface of the at least one portion 210 of the wind turbine blade 200, wherein an edge region of the protective film is located in the groove, as exemplary shown in FIG. 2D. In some embodiments, the wind turbine blade 200 has at least one portion 210 of the wind turbine blade 200, which may include a polymeric material in at least one portion of an interface between the protective film 280 and the groove 230.

According to some embodiments, which can be combined with other embodiments described herein, the groove 230 may have a groove depth 250 of 0.1 to 4 mm, particularly 0.2 to 1.5 mm, and more particularly 0.4 to 0.9 mm in a thickness direction of the wind turbine blade 200. In some embodiments, the groove 230 may have a groove width 270 extending 40 mm, particularly 30 mm, and more particularly 20 mm in a chord direction on the surface of the at least one portion 210 of the wind turbine blade 200.

In some embodiments, a ratio of the groove depth to the groove width is 1:40, particularly 1:20, and more particularly 1:10. In some embodiments, the groove 230 may extend along an blade span direction of the wind turbine blade 200 and/or along a chord direction of the wind turbine blade 200.

In some embodiments, the first region A of the surface of the at least one portion 210 of the wind turbine blade 200 including the groove 230 may be located on a suction side and/or on a pressure side of the wind turbine blade 200. In some embodiments, the first region A of the surface of the at least one portion 210 of the wind turbine blade 200 including the groove 230 may extend from a suction side to a pressure side of the wind turbine blade 200. In some embodiments, the second region B of the surface of the at least one portion of the wind turbine blade may be located on a suction side and/or on a pressure side of the wind turbine blade 200. In some embodiments, the second region B of the surface of the at least one portion 210 of the wind turbine blade 200 may extend from a suction side to on a pressure side of the wind turbine blade 200. In some embodiments, the protective film 280 may extend from a suction side to a pressure side of the wind turbine blade 200. In some embodiments, the edge region of the protective film 280 may include a first edge region located on a suction side of the wind turbine blade 200 and a second edge region located on a pressure side of the wind turbine blade 200.

In some embodiments, forming a groove 230 on a surface of the at least one portion of the wind turbine blade may include forming a first groove on a suction side of the wind turbine blade 200 and a second groove on a pressure side of the wind turbine blade 200. In some embodiments, pressing an edge region of the protective film 280 in the groove 230 may include pressing a first edge region of the protective film 280 located on a suction side of the wind turbine blade 200 and a second edge region of the protective film 280 located on a pressure side of the wind turbine blade 200. In some embodiments, inserting the edge region of the protective film 280 in the groove 230 may include inserting a first edge region of the protective film in a first groove on a suction side of the wind turbine blade 200 and inserting a second edge region of the protective film 280 in a second groove on a pressure side of the wind turbine blade 200.

According to some embodiments, which can be combined with other embodiments described herein, forming 130 the groove 230 on the surface of the at least one portion 210 of the wind turbine blade 200 may include grinding or milling the surface of the at least one portion 210 of the wind turbine blade 200, providing a polymeric paste on the surface of the at least one portion 210 of the wind turbine blade 200 and molding the polymeric paste or melting and molding the surface of the at least one portion 210 of the wind turbine blade 200. For instance, grinding the surface of the at least one portion 210 of the wind turbine blade 200 may be conducted by removing material from the surface of the at least one portion 210 of the wind turbine blade 200 using a grinding wheel.

As an example, milling the surface of the at least one portion 210 of the wind turbine blade 200may be conducted with an end mill. As another example, melting and molding the surface of the at least one portion 210 of the wind turbine blade 200 may be conducted by moving a heated tool along a blade span direction. As an example, molding the polymeric paste may be conducted by moving a mold with a shape corresponding to the groove 230 over the polymeric paste, e.g., during blade manufacturing or after curing of the wind turbine blade 200 and addition of a layer on the surface of the wind turbine blade 200. In some embodiments, the polymeric paste may include an epoxy resin and/ polyester resin. In addition, the polymeric paste may include carbon fibers and/or glass fibers.

In some embodiments, forming 130 the groove 230 on the surface of the at least one portion 210 of the wind turbine blade 200 may include at least one of removing one portion of a protective coating layer from the at least one portion 210 of the wind turbine blade 200. In some embodiments, forming 130 the groove 230 on the surface of the at least one portion 210 of the wind turbine blade 200 may include measuring a thickness of a protective coating layer on the at least one portion 210 of the wind turbine blade 200. Examples of the protective coating layer may be a paint layer, a gelcoat layer and/or a polymeric coating layer, e.g., a polymeric coating layer including carbon fibers and/or glass fibers. An example of measuring a thickness of a protective coating layer without removing one portion of the protective coating layer can be ultrasonic non-destructive testing.

In some embodiments, forming 130 the groove 230 on the surface of the at least one portion 210 of the wind turbine blade 200 can be implemented using an apparatus for forming the groove 230 on a surface of at least one portion 210 of a wind turbine blade 200 according to the present disclosure, as described below.

In some embodiments, measuring a thickness of a protective coating layer on the at least one portion 210 of the wind turbine blade 200 may further include comparing the thickness of the protective coating layer on the at least one portion 210 of the wind turbine blade 200 with a predetermined thickness threshold and applying a protective coating composition on the at least one portion 210 of the wind turbine blade 200 to obtain a protective coating layer on the at least one portion 210 of the wind turbine blade 200 with a thickness in the predetermined thickness threshold. For instance, the protective coating composition may include a monomer, an oligomer, and/ a polymer and carbon fibers and/or glass fibers. In some embodiments, the protective coating composition can be a paint composition.

In some embodiments, forming 130 the groove 230 on the surface of the at least one portion 210 of the wind turbine blade 200 may include measuring a surface roughness of a protective coating layer on the at least one portion 210 of the wind turbine blade 200. In some embodiments, measuring a surface roughness of a protective coating layer on the at least one portion 210 of the wind turbine blade 200 may further include comparing the surface roughness of the protective coating layer on the at least one portion 210 of the wind turbine blade 200 with a predetermined roughness threshold and applying a protective coating composition on the at least one portion 210 of the wind turbine blade 200 to obtain a protective coating layer on the at least one portion 210 of the wind turbine blade 200 with a roughness in the predetermined roughness threshold.

In some embodiments, forming 130 the groove 230 on the surface of the at least one portion 210 of the wind turbine blade 200 may include providing a paint composition or a protective coating composition on the surface of the at least one portion 210 of the wind turbine blade 200 including the groove 230. In some embodiments, forming 130 the groove 230 on the surface of the at least one portion 210 of the wind turbine blade 200 may include providing a paint composition or a protective coating composition on the first region A of a surface of at least one portion 210 of the wind turbine blade 200 including the groove 230. In some embodiments, forming 130 the groove 230 on the surface of the at least one portion 210 of the wind turbine blade 200 may include providing a paint composition or a protective coating composition on the second region B of a surface of at least one portion 210 of the wind turbine blade 200.

According to some embodiments, which can be combined with other embodiments described herein, the method 100 may further include covering at least one portion of the second region B of the surface of the at least one portion 210 of the wind turbine blade 200 with the protective film 280, wherein a first portion of the protective film 280 is positioned on the first region A of the surface of the at least one portion 210 of the wind turbine blade 200 and a second portion of the protective film 280 is positioned on the at least one portion of the second region B of the surface of the at least one portion 210 of the wind turbine blade 200, as exemplary shown in FIG. 2C-2. In some embodiments, the method 100 may further include trimming the second portion of the protective film 280.

In some embodiments, covering 140 the first region A of the surface of the at least one portion 210 of the wind turbine blade 200 with a protective film 280 may include trimming the protective film 280.

According to some embodiments, which can be combined with other embodiments described herein, the polymeric material can be at least one of a sealant, a glue, and a filter. In some embodiments, providing the polymeric material in the at least one portion of the interface between the first section of the protective film 280 and the groove 230 includes removing excess of the polymeric material.

In some embodiments, the protective film 280 may include a backing layer. In some embodiments, the protective film 280 may include an adhesive. In some embodiments, covering 140 the first region A of the surface of the at least one portion 210 of the wind turbine blade 200 with a protective film 280 may include removing a backing layer of the protective film 280. The use of a protective film 280 including a backing layer may be advantageous since the protective film 280 can be first oriented on the surface of the at least one portion 210 of the wind turbine blade 200 and, thereafter, the backing layer of the protective film 280 may be removed when the protective film 280 is in a desired position on the surface of the at least one portion 210 of the wind turbine blade 200. Accordingly, the groove 230 helps to align the protective film 280 with respect to the first region A of the surface of the at least one portion 210 of the wind turbine blade 200.

According to some embodiments, which can be combined with other embodiments described herein, covering at least one portion of the second region B of the surface of the at least one portion 210 of the wind turbine blade 200 with the protective film 280 may include folding back at least one portion of the protective film 280, e.g., at least one portion of the first portion of the protective film 280, as shown in FIG. 2E-1. Accordingly, folding back at least one portion of the protective film 280 facilitates providing a polymeric material in at least one portion of an interface between the protective film 280 and the groove 230 and also removing a backing layer of the protective film 280.

Further, folding back at least one portion of the protective film 280 provides a better access to at least one portion of the interface between the protective film 280 and the groove 230 and the polymeric material can be provided to a larger area of the interface between the protective film 280 and the groove 230, which fills voids between the protective film 280 and the groove 230 and enhances adhesion between the protective film 280 and the groove 230.

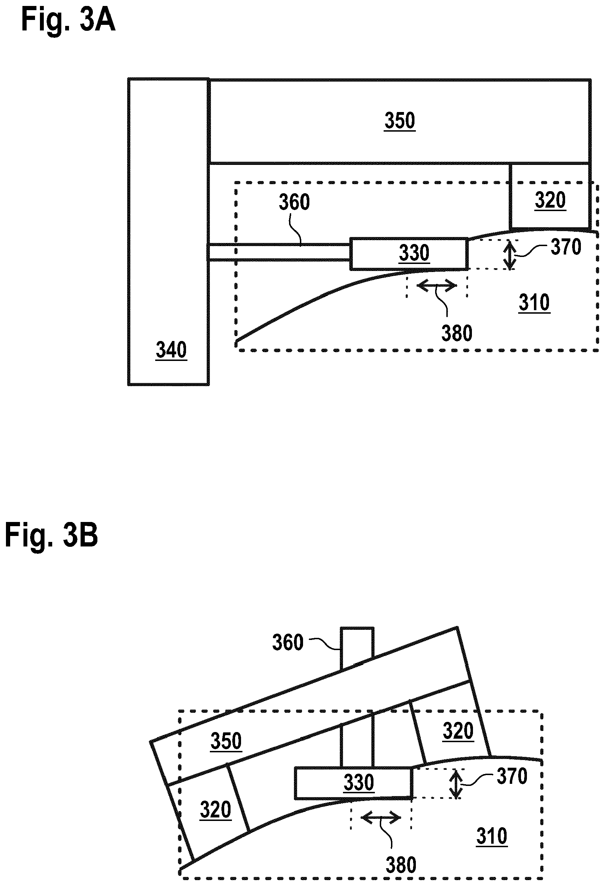

FIGS. 3A and 3B show an apparatus for forming a groove on a surface of at least one portion 310 of a wind turbine blade according to embodiments described herein. The apparatus includes a groove forming portion 330. Further, the apparatus includes a guiding structure 320, 340, 350 supporting the groove forming portion 330, attached to the groove forming portion 330, and configured to limit a groove depth 370 of a groove, in a thickness direction of the wind turbine blade, formed by the groove forming portion 330. Furthermore, the guiding structure 320, 340, 350 includes at least one portion 320 configured to be in contact with the surface of the at least one portion 310 of the wind turbine blade while the groove on the surface of the at least one portion 310 of the wind turbine blade is formed. The at least one portion 320 helps to decrease the sensitivity of the apparatus for forming a groove to tilt angle variations and allows a better control of the groove depth since the at least one portion 320 is close to and in contact with the surface of at least one portion 310 of a wind turbine blade.

According to some embodiments, which can be combined with other embodiments described herein, the groove forming portion 330 can be configured for grinding or milling the surface of the at least one portion 310 of the wind turbine blade, configured for molding the surface of the at least one portion 310 of the wind turbine blade or configured for melting and molding the surface of the at least one portion of the wind turbine blade. As an example, the groove forming portion 330 can be a grinding wheel, a cutting blade or a mold with a shape corresponding to the groove. In some embodiments, the groove forming portion 330 can be attached to the guiding structure 320, 340, 350 through a connecting element 360. In some embodiments, the connecting element 360 or the guiding structure 320, 340, 350 may include a rotor.

In some embodiments, the groove forming portion 330 can be configured to withdraw from the surface of at least one portion 310 of a wind turbine blade. In some embodiments, the groove forming portion 330 can be configured to approach to the surface of at least one portion 310 of a wind turbine blade. In some embodiments, the connecting element 360 can be configured to withdraw from the surface of at least one portion 310 of a wind turbine blade. In some embodiments, the connecting element 360 can be configured to approach to the surface of at least one portion 310 of a wind turbine blade.

In some embodiments, the groove forming portion 330 may include a first section corresponding to the groove depth 370 of the groove. In some embodiments, the groove forming portion 330 may include a first section configured to be oriented in a thickness direction and to extend 0.1 to 4 mm, particularly 0.2 to 1.5 mm, and more particularly 0.4 to 0.9 mm in a thickness direction of the wind turbine blade. In some embodiments, the groove forming portion 330 may include a first section configured to be oriented in a thickness direction and to extend at least 0.1 mm, particularly at least 0.2 mm, and more particularly at least 0.4 mm in a thickness direction of the wind turbine blade.

In some embodiments, the groove forming portion 330 may include a second section corresponding to the groove width 380 of the groove. In some embodiments, the groove forming portion 330 may include a second section configured to be oriented in a chord direction and to extend at least 40 mm, particularly at least 30 mm, and more particularly at least 20 mm in a chord direction on the surface of the at least one portion 310 of the wind turbine blade.

While the foregoing is directed to embodiments of the disclosure, other and further embodiments of the disclosure may be devised without departing from the basic scope thereof, and the scope thereof is determined by the claims that follow.

## Claims

1. Method of applying a protective film on at least one portion of a wind turbine blade, the method comprising:
a. providing the at least one portion of the wind turbine blade,
b. forming a groove on a surface of the at least one portion of the wind turbine blade, thereby delimiting a first region of the surface of the at least one portion of the wind turbine blade from a second region of the surface of the at least one portion of the wind turbine blade, wherein the first region of the surface of the at least one portion of the wind turbine blade includes the groove,
c. covering the first region of the surface of the at least one portion of the wind turbine blade with a protective film, and
d. pressing an edge region of the protective film in the groove, thereby inserting the edge region of the protective film in the groove.

2. The method of claim 1, wherein the method further includes:
c1. covering at least one portion of the second region of the surface of the at least one portion of the wind turbine blade with the protective film, wherein a first portion of the protective film is positioned on the first region of the surface of the at least one portion of the wind turbine blade and a second portion of the protective film is positioned on the at least one portion of the second region of the surface of the at least one portion of the wind turbine blade, and
c2. trimming the second portion of the protective film.

3. The method of any of claims 1 and 2, wherein the groove has a groove depth of 0.1 to 4 mm, particularly 0.2 to 1.5 mm, and more particularly 0.4 to 0.9 mm in a thickness direction of the wind turbine blade.

4. The method of any of preceding claims, wherein the groove has a groove width extending 40 mm, particularly 30 mm, and more particularly 20 mm in a chord direction on the surface of the at least one portion of the wind turbine blade.

5. The method of any of preceding claims, wherein the groove extends along a blade span direction of the wind turbine blade and/or along a chord direction of the wind turbine blade.

6. The method of any of preceding claims, wherein forming the groove on the surface of the at least one portion of the wind turbine blade includes grinding or milling the surface of the at least one portion of the wind turbine blade, providing a polymeric paste on the surface of the at least one portion of the wind turbine blade and molding the polymeric paste or melting and molding the surface of the at least one portion of the wind turbine blade.

7. The method of any of preceding claims, wherein forming the groove on the surface of the at least one portion of the wind turbine blade includes at least one of removing one portion of a protective coating layer from the at least one portion of the wind turbine blade and measuring a thickness of the protective coating layer on the at least one portion of the wind turbine blade.

8. The method of claim 7, wherein measuring a thickness of a protective coating layer on the at least one portion of the wind turbine blade further includes comparing the thickness of the protective coating layer on the at least one portion of the wind turbine blade with a predetermined thickness threshold and applying a protective coating composition on the at least one portion of the wind turbine blade to obtain a protective coating layer on the at least one portion of the wind turbine blade with a thickness in the predetermined thickness threshold.

9. The method of any of preceding claims, wherein the method further comprises providing a polymeric material in at least one portion of an interface between the protective film and the groove.

10. The method of claim 9, wherein providing the polymeric material in the at least one portion of the interface between the first section of the protective film and the groove includes removing excess of the polymeric material and the polymeric material is at least one of a sealant, a glue, and a filler.

11. Wind turbine blade having at least one portion of the wind turbine blade comprising:
a groove in a first region of a surface of at least one portion of the wind turbine blade, wherein the groove delimits the first region of the surface of the at least one portion of the wind turbine blade from a second region of the surface of the at least one portion of the wind turbine blade, and
a protective film on the first region of the surface of the at least one portion of the wind turbine blade,
wherein an edge region of the protective film is located in the groove.

12. The wind turbine blade of claim 11, wherein the groove has a groove depth of 0.1 to 4 mm, particularly 0.2 to 1.5 mm, and more particularly 0.4 to 0.9 mm in a thickness direction of the wind turbine blade.

13. The wind turbine blade of claim 12, wherein the groove extends 40 mm, particularly 30 mm, and more particularly 20 mm in a chord direction on the surface of the at least one portion of the wind turbine blade.

14. Apparatus for forming a groove on a surface of at least one portion of a wind turbine blade, the apparatus comprising:
a groove forming portion, and
a guiding structure supporting the groove forming portion, attached to the groove forming portion, and configured to limit a groove depth of a groove, in a thickness direction of the wind turbine blade, formed by the groove forming portion,
wherein the guiding structure includes at least one portion configured to be in contact with the surface of the at least one portion of the wind turbine blade while the groove on the surface of the at least one portion of the wind turbine blade is formed.

15. The apparatus of claim 14, wherein the groove forming portion is configured for grinding or milling the surface of the at least one portion of the wind turbine blade, configured for molding the surface of the at least one portion of the wind turbine blade or configured for melting and molding the surface of the at least one portion of the wind turbine blade.
